# EUROPEAN PATENT SPECIFICATION

(11) **EP 2 702 918 B1**
(45) Date of publication and mention of the grant of the patent: **14.12.2016**
(21) Application number: 12776192.2
(22) Date of filing: 23.04.2012
(51) Int. Cl.: A47L 9/28, G05D 1/02, A47L 9/04

(54) **VACUUM CLEANER**
STAUBSAUGER
ASPIRATEUR ELECTRIQUE

(30) Priority: 28.04.2011 JP 2011102244
(43) Date of publication of application: 05.03.2014
(73) Proprietor: Toshiba Lifestyle Products & Services Corporation, Ome-shi, Tokyo 198-8710 (JP)
(72) Inventor: ABE Kouichi, Tokyo 105-8001 (JP); NAITO Junji, Tokyo 105-8001 (JP)
(74) Representative: O'Connell, David Christopher
(86) International application number: PCT/JP2012/060816
(87) International publication number: WO 2012/147669

(56) References cited:
- JP-A- 2005 111 042
- JP-A- 2005 111 042
- JP-A- 2006 087 508
- JP-A- 2006 087 508
- US-A1- 2004 187 249

## Description

### TECHNICAL FIELD

The present invention relates to an electric vacuum cleaner that cleans a surface to be cleaned while autonomously traveling on the surface to be cleaned.

### BACKGROUND ART

There is a conventional electric vacuum cleaner that cleans a floor surface as a surface to be cleaned while detecting obstacles, etc., by using, for example, sensors, etc., and autonomously traveling on the floor surface. Such an electric vacuum cleaner has a suction port formed on the lower part of a main body case that houses an electric blower and includes a dust collecting part, and driving wheels attached to sides, etc., of the suction port. Therefore, suction ports cannot be provided on both the sides corresponding to the driving wheels, and it is not easy to vacuum dust which is located on the floor surface on the sides of the main body case. Therefore, a constitution including side brushes as turn cleaning parts provided on both sides of the lower part of the main body case to sweep dust into the suction port by turning on the floor surface is known.

However, side brushes project downward with respect to the main body case, and may be caught by a level difference created by a mat such as a carpet laid on the floor surface such as a flooring and the electric vacuum cleaner may become unable to travel (become stuck).

### CITATION LIST

### Patent Literature

[PTL 1] Japanese Laid-Open Patent Publication No. 2006-106816
[PTL 2] Japanese Laid-Open Patent Publication No. 6-125861
[PTL 3] Japanese Laid-Open Patent Publication No. 7-322977
[PTL 4] US 2004/0187249

### SUMMARY OF INVENTION

### Technical Problem

An object of the present invention is to provide an electric vacuum cleaner capable of being prevented from becoming unable to travel due to catching of a turn cleaning part by an obstacle on a surface to be cleaned.

### Solution to Problem

An electric vacuum cleaner according to an embodiment is an electric vacuum cleaner that cleans a surface to be cleaned while autonomously traveling on the surface to be cleaned. This electric vacuum cleaner has a main body case. In addition, this electric vacuum cleaner has a dust collection port provided on the lower part of the main body case. Further, this electric vacuum cleaner has an autonomous traveling driving part provided on the lower part of the main body case. Further, this electric vacuum cleaner includes a cleaning member that comes into contact with a surface to be cleaned, and a turn cleaning part provided in front of the dust collection port on the lower part of the main body case so as to turn on the surface to be cleaned. Further, this electric vacuum cleaner includes an obstacle detecting unit that detects whether an obstacle that obstructs autonomous traveling is on the surface to be cleaned. This electric vacuum cleaner includes a control unit that controls the driving part so as to avoid an obstacle by changing the autonomous traveling state when the obstacle detecting unit detects the obstacle that obstructs autonomous traveling on the surface to be cleaned.

### BRIEF DESCRIPTION OF DRAWINGS

Fig. 1 is an explanatory side view showing a part of obstacle avoiding movements of a lower part of a main body case of an electric vacuum cleaner according to a first embodiment in order from (a) to (c).
Fig. 2 is an explanatory plan view showing obstacle avoiding movements of the lower part of the main body case of the same electric vacuum cleaner in order from (a) to (c).
Fig. 3 is a side view showing the same electric vacuum cleaner.
Fig. 4 is a bottom view showing the same electric vacuum cleaner.
Fig. 5 is a block diagram showing the same electric vacuum cleaner.
Fig. 6 is an explanatory plan view showing obstacle avoiding movements of a lower part of a main body case of an electric vacuum cleaner according to a second embodiment in order from (a) and (b).
Fig. 7 is an explanatory plan view showing obstacle avoiding movements of a lower part of a main body case of an electric vacuum cleaner according to a third embodiment.
Fig. 8 is an explanatory plan view showing obstacle avoiding movements of a lower part of a main body case of an electric vacuum cleaner according to a fourth embodiment.
Fig. 9 is a block diagram showing an electric vacuum cleaner according to a fifth embodiment.
Fig. 10 is a block diagram showing an electric vacuum cleaner according to a sixth embodiment.
Fig. 11 is a bottom view showing the same electric vacuum cleaner.

### DESCRIPTION OF EMBODIMENTS

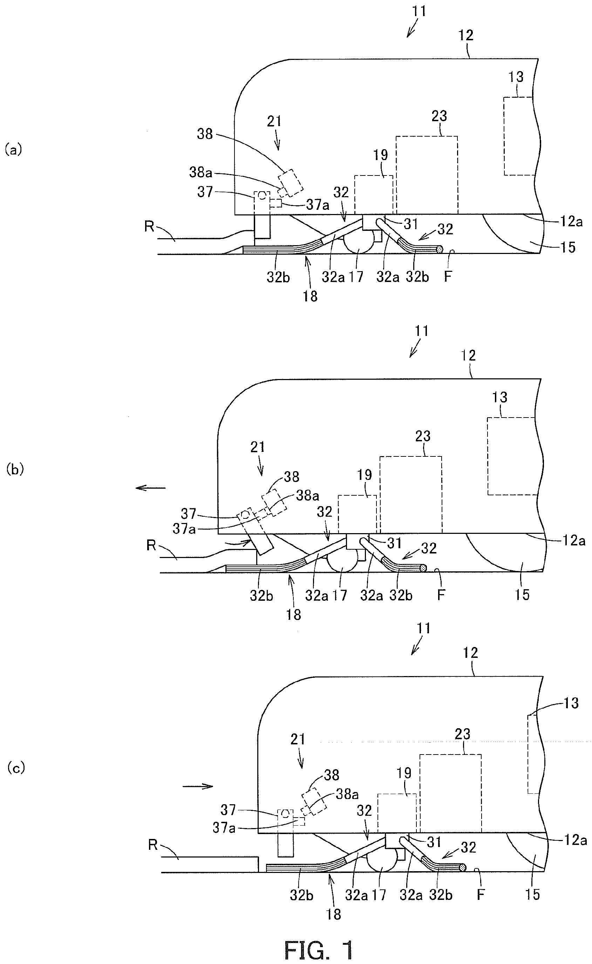

Hereinafter, a constitution of a first embodiment is described with reference to Fig. 1 to Fig. 5.

In Fig. 1 to Fig. 5, the reference symbol 11 denotes an electric vacuum cleaner 11, and in the present embodiment, as this electric vacuum cleaner 11, a so-called automatic traveling robot cleaner that cleans a floor surface F as a surface to be cleaned while autonomously (automatically) traveling on the floor surface F is described by way of example.

This electric vacuum cleaner 11 includes a hollow main body case 12, an electric blower 13 housed in this main body case 12, a dust collecting part 14 provided in the main body case 12 so as to communicate with the suction side of the electric blower 13, driving wheels 15 that make the electric vacuum cleaner 11 autonomously travel, that is, as, for example, a plurality of autonomous traveling driving parts, a motor 16 as a driving unit that drives these driving wheels 15, a turn wheel 17 attached turnably to the lower part of the main body case 12, side brushes 18 as, for example, a pair of turn cleaning parts attached to the lower part of the main body case 12 so as to turn on the floor surface F, turn motors 19 as turn driving units that drive the side brushes 18, respectively, a sensor 20 as a plurality of detecting units attached to the main body case 12, an obstacle detecting unit 21 positioned on the lower part of the main body case 12, a control unit 22 including a circuit board, etc. , and a secondary battery 23 as a battery constituting a power supply part.

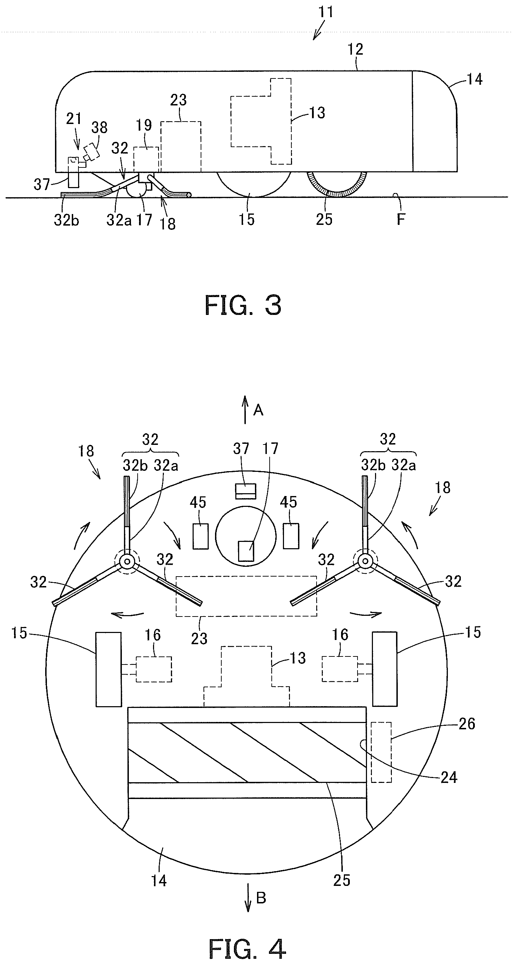

Hereinafter, description is given by defining a direction along a traveling direction of the electric vacuum cleaner 11 (main body case 12) as the longitudinal direction (the arrow A and B directions shown in Fig. 4), and the lateral direction (both side direction) crossing (orthogonal to) the longitudinal direction as the width direction.

The main body case 12 is formed from, for example, synthetic resin into a flat columnar (disk) shape, etc., and at the central part in the width direction close to the rear part of the circular lower surface 12a, a suction port 24 as a dust collection port longitudinal in the width direction, that is, horizontally long is formed to open. On the upper part of the main body case 12, various operation panels and displaying parts, etc., are arranged although these are not illustrated.

The suction port 24 communicates with the dust collecting part 14. Further, on this suction port 24, a shaft-shaped rotary brush 25 as a rotary cleaning body is axially supported rotatably, and this rotary brush 25 is driven to rotate by a rotary motor 26 as a cleaning body driving unit attached to the inside of the main body case 12.

For example, the rotary brush 25 is constituted by spirally attaching a plurality of cleaning body parts to the outer circumferential surface of a long shaft part in radial directions so as to project like walls. The lower side of this rotary brush 25 projects downward of the lower surface 12a of the main body case 12, and tip ends of the cleaning body parts positioned at the lower side in a state where the electric vacuum cleaner 11 is laid on the floor surface F come into contact with the floor surface F.

The dust collecting part 14 traps dust vacuumed from the suction port 24 by driving of the electric blower 13, and for the dust collecting part, an arbitrary constitution such as a constitution that filtrates and traps dust by a dust collecting bag such as a paper pack or a filter, or a constitution that separates and traps dust by inertial separation such as centrifugal separation (cyclone separation) or linear separation can be used. This dust collecting part 14 is positioned at the rear part of the main body case 12 on the upper side of the suction port 24, and removably attached to the main body case 12.

The driving wheels 15 project at least at their lower sides downward from the lower surface 12a of the main body case 12, and can be rotated by contact with the floor surface F in the state where the electric vacuum cleaner 11 is laid on the floor surface F. These driving wheels 15 are positioned on, for example, both sides of the approximately central part in the longitudinal direction of the main body case 12 in front of the suction port 24, and rotate along the longitudinal direction.

The motors 16 are arranged, for example, corresponding to the driving wheels 15, respectively, and can be driven independently from each other. These motors 16 may be directly connected to the driving wheels 15, or may be connected to the driving wheels 15 via an unillustrated transmitting unit such as gears or belts.

The turn wheel 17 is positioned at the approximately central part in the width direction at the front part of the main body case 12, and is a driven wheel turnable along the floor surface F.

Each side brush 18 includes a disk-shaped brush base part 31 that is the turn central part as a turn cleaning part base part, and, for example, three cleaning bodies 32 projecting radially from the brush base part 31 and inclined toward the floor surface F. The side brushes 18 and 18 are attached to the lower surface 12a of the main body case 12 so that the brush base parts 31 and 31 each of which is a center of rotation are positioned on both sides in front of the suction port 24 and the driving wheels 15 and 15 at the rear of the turn wheel 17.

The number of cleaning bodies 32 is, for example, three, and the cleaning bodies are spaced at approximately even intervals in the circumferential directions of the brush base parts 31 and 31. The number of cleaning bodies 32 may be, for example, four or more.

Each cleaning body 32 includes a shaft part 32a projecting along a radial direction from the brush base part 31 and a plurality of brush bristles 32b as cleaning members implanted on the tip end of the shaft part 32a. These brush bristles 32b are formed from a synthetic resin, etc., in a linear arrangement thinner than the shaft part 32a. Each cleaning body 32 is constituted so that at least the tip end sides, approximating the whole in the present embodiment of the brush bristles 32b come into elastic contact with the floor surface F in the state where the electric vacuum cleaner 11 is laid on the floor surface F.

The turn motors 19 have rotary shafts projecting downward and connected to the brush base parts 31, and can rotate the side brushes 18 to the central side in the width direction of the main body case 12, in other words, rotate the right side brush 18 counterclockwise and the left side brush 18 clockwise, that is, the side brushes 18 sweep dust to the suction port 24 side.

The sensor 20 is, for example, a ranging sensor such as an ultrasonic sensor or an infrared sensor, or a contact sensor that becomes a bumper by direct contact with an obstacle, and is arranged on the front part, side part, or lower part of the main body case 12, and can detect the presence of an obstacle (wall) in front of the main body case 12, an obstacle (wall) at the side of the main body case, or an obstacle (level difference) under the main body case, and distances between these obstacles and the main body case 12.

An obstacle detecting unit 21 detects whether the brush bristles 32b of each side brush 18 have extended under a mat R such as a carpet or a straw mat that is an obstacle (whether the mat R has been lifted from the floor surface F), and can be variously constituted, however, in the present embodiment, as shown in Fig. 1 to Fig. 3, the obstacle detecting unit includes a lever-shaped turn body 37 arranged on the lower surface 12a of the main body case 12, and a microswitch 38 that is a switch arranged in the main body case 12 at the rear of the turn body 37, and is arranged in front of the turn wheel 17 at the central position in the lateral width direction of the main body case 12.

The turn body 37 is an obstacle sensing part (mat sensing part), and is arranged turnably in the longitudinal direction with respect to the main body case 12, and on the rear part thereof, that is, on the microswitch 38 side, a projecting part 37a is provided. This turn body 37 is positioned forward relative to the brush base parts 31 of the side brushes 18 and rearward relative to the tip end parts (of the brush bristles 32b) of the cleaning bodies 32 positioned at the forefront, and in a normal state (non-load state), the lower end side that is the tip end side projects downward from the lower surface 12a of the main body case 12. The amount of projection of the lower end part that is the tip end part of the turn body 37 from the lower surface 12a of the main body case 12 is set to be larger than the amount of projection of the brush base parts 31 of the side brushes 18 from the lower surface 12a of the main body case 12, and according to the amount of projection of the lower end part of the turn body 37 from the lower surface 12a of the main body case 12, the sensitivity of the obstacle detecting unit 21 is set. That is, as the amount of projection of the lower end part of the turn body 37 from the lower surface 12a of the main body case 12 becomes larger, a thinner mat R can be detected, so that this amount of projection is properly set according to the thickness of a mat R that needs to be detected.

The microswitch 38 is, for example, a constantly opened or constantly closed switch constituted so that, for example, a button-shaped switching part 38a projects toward the lower front side that is the turn body 37 side, and is allowed to switch to on/off (opened/closed) only while the switching part 38a is pressed by the projecting part 37a of the turn body 37 pushed relatively rearward and turned by, for example, contact with the mat R.

According to on/off switching of the microswitch 38 by rearward turning of the turn body 37 by contact with the mat R projecting between the lower surface 12a of the main body case 12 and the floor surface F, the obstacle detecting unit 21 detects whether the brush bristles 32b of each side brush 18 have extended under the mat R (whether the mat R has been lifted from the floor surface F).

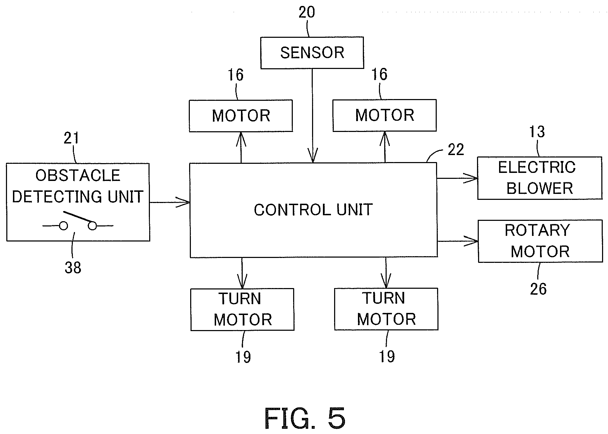

The control unit 22 includes a storing unit such as a memory and a control part such as a microcomputer, and is, as shown in Fig. 5, electrically connected to the electric blower 13, the rotary motor 26, the motors 16, the turn motors 19, the sensor 20, and the obstacle detecting unit 21 (microswitch 38), etc. , and can control driving of the electric blower 13, the rotary motor 26, the motors 16, and the turn motors 19, etc., based on the results of detections by the sensor 20 and the obstacle detecting unit 21 (microswitch 38).

The secondary battery 23 shown in Fig. 3 and Fig. 4 supplies power to each part shown in Fig. 5, that is, the control unit 22, the electric blower 13, the rotary motor 26, the motors 16, the turn motors 19, and the sensor 20, etc. This secondary battery 23 is arranged at, for example, a position at the rear of the turn wheel 17. This secondary battery 23 is electrically connected to charging terminals 45 and 45 positioned on the lower surface 12a of the main body case 12 on both sides of the turn wheel 17, and can be charged by connecting the charging terminals 45 and 45 to, for example, a predetermined unillustrated charging table set at a predetermined position in a room.

Next, operations of the first embodiment described above are described.

The electric vacuum cleaner 11 drives the electric blower 13 and starts cleaning from, for example, the charging table at, for example, a predetermined time set in advance in the control unit 22. The cleaning start position can be set to an arbitrary location such as a traveling start position of the electric vacuum cleaner 11 or an entrance of a room, etc.

The electric vacuum cleaner 11 autonomously travels on the floor surface F by the driving wheels 15 and 15 by rotationally driving the motors 16 and 16 by the control unit 22. At this time, the control unit 22 monitors the position and the traveling state of the electric vacuum cleaner 11 by detecting distances to surrounding obstacles, etc., via the sensor 20, and according to such detection by the sensor 20, travels on the floor surface F while avoiding obstacles. This electric vacuum cleaner 11 vacuums dust on the floor surface F together with air from the suction port 24 to which a negative pressure is applied via the dust collecting part 14 by driving of the electric blower 13.

At the same time, by properly driving the rotary motor 26 and the turn motors 19 and 19, the control unit 22 rotates the rotary brush 25 along the floor surface F and turns the side brushes 18 and 18 on the floor surface F to scrape off dust getting into the floor surface F by the cleaning body parts of the rotary brush 25 and the brush bristles 32b of the side brushes 18 and gather dust together to the central side in the width direction of the main body case 12, that is, the suction port 24 side, and vacuum the dust from the suction port 24.

The dust vacuumed together with air from the suction port 24 is separated and trapped by the dust collecting part 14, and air from which dust is separated is vacuumed to the electric blower 13 and cools the electric blower 13, and then becomes exhaust air and is exhausted to the outside from the main body case 12.

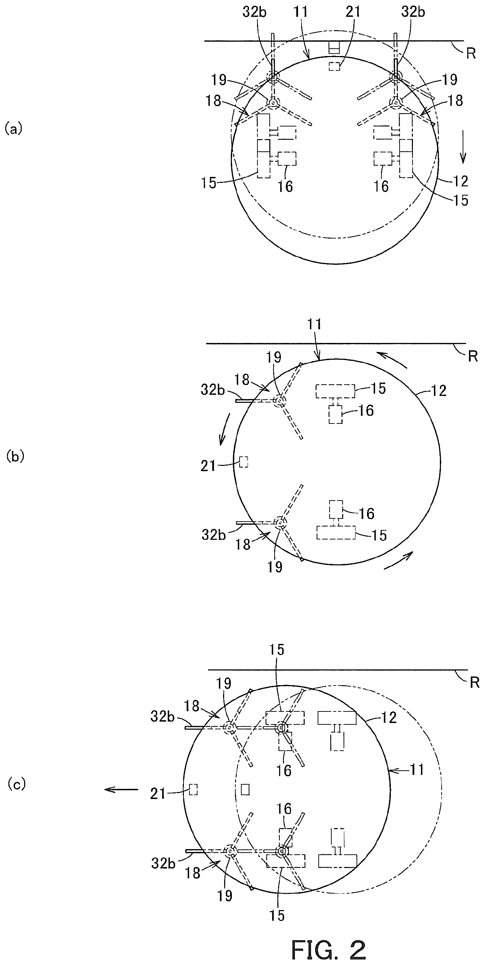

Further, during autonomous traveling of the electric vacuum cleaner 11, for example, as shown in Fig. 1(a), when the brush bristles 32b of at least one of the side brushes 18 extended under the mat R and the mat R is lifted (turned up), this lifted mat R comes into contact with the front part of the turn body 37 of the obstacle detecting unit 21, and when the electric vacuum cleaner 11 further advances, as shown in Fig. 1(b), the turn body 37 turns rearward and the projecting part 37a of the turn body 37 presses the switching part 38a of the microswitch 38 to switch the microswitch 38 to on/off. In other words, the mat R that is an obstacle under the main body case 12 is detected by the obstacle detecting unit 21. According to on/off switching of the microswitch 38, the control unit 22 determines that the mat R is under the front part of the main body case 12 (electric vacuum cleaner 11), and drives the driving wheels 15 via the motors 16 to change the autonomous traveling direction of the electric vacuum cleaner 11. In detail, the control unit 22 changes the polarities of energization to the motors 16 and reverses the motors 16 to reverse the driving wheels 15 and back up the electric vacuum cleaner 11 (Fig. 1 (c) and Fig. 2 (a)). Then, due to this backward traveling, the brush bristles 32b of the side brush 18 come out from the part under the mat R and are separated from the mat R, and lifting of the mat R is canceled and the turn body 37 turned rearward by the mat R is turned forward to return, and accordingly, the projecting part 37a of the turn body 37 is separated from the switching part 38a of the microswitch 38, so that the microswitch 38 is restored to on/off. Therefore, the mat R under the main body case 12 is not detected any more by the obstacle detecting unit 21, so that the control unit 22 restores autonomous traveling control of the electric vacuum cleaner 11. That is, the electric vacuum cleaner 11 avoids the mat R.

At this time, the control unit 22 changes the advancing direction of the electric vacuum cleaner 11 by turning the electric vacuum cleaner 11 by, for example, 90 degrees to the side as shown in Fig. 2 (b) by making the rotation directions of the driving wheels 15 (motors 16) opposite to each other, and makes the electric vacuum cleaner 11 autonomously travel in the changed advancing direction as shown in Fig. 2(c). Specifically, the control unit 22 controls the driving wheels 15 (motors 16) so that the electric vacuum cleaner 11 changes its autonomous traveling state and avoids this obstacle.

When the control unit 22 determines that cleaning of the whole floor surface F to be cleaned has been completed, the control unit 22 makes the electric vacuum cleaner 11 autonomously travel to the position of the charging table, stops the electric blower 13 and the motors 19 and 26, etc., (physically and electrically) connects the charging terminals 45 and 45 to the charging table and stops the motors 16 and 16, and ends driving and charges the secondary battery 23.

Thus, according to the first embodiment described above, when the obstacle detecting unit 21 detects that the mat R on the floor surface F has been lifted, the control unit 22 temporarily backs up the electric vacuum cleaner 11 and then changes the advancing direction to avoid the mat R, and accordingly, it can be reliably prevented that the electric vacuum cleaner 11 becomes unable to travel due to advancing in the state where the electric vacuum cleaner lifts the mat R up.

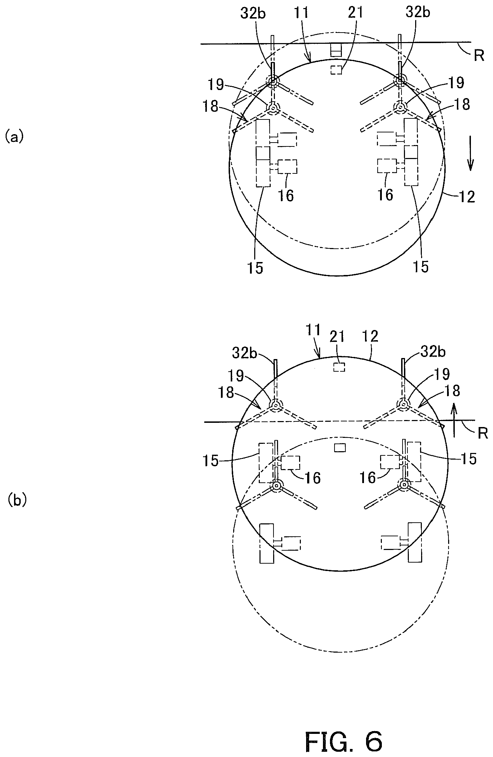

Next, a second embodiment is described with reference to Fig. 6. The same components and operations as in the first embodiment described above are provided with the same reference symbols and description thereof is omitted.

According to the second embodiment, in the first embodiment described above, when the obstacle detecting unit 21 detects that the mat R on the floor surface F has been lifted, the control unit 22 controls the driving wheels 15 (motors 16) so that the electric vacuum cleaner 11 changes its autonomous traveling state and avoids this obstacle, that is, the electric vacuum cleaner 11 temporarily travels backward and then travels forward again in the same direction.

In detail, when the obstacle detecting unit 21 detects that the mat R on the floor surface F has been lifted, as shown in Fig. 6(a), the control unit 22 backs up the electric vacuum cleaner 11 by a predetermined distance, for example, to a position at which the brush bristles 32b of the side brush 18 come out from the part under the mat R, and advances the electric vacuum cleaner 11 again as shown in Fig. 6(b). At this time, for example, when the brush bristles 32b of the side brush 18 extend under the mat R again, the control shown in Fig. 6 (a) and Fig. 6 (b) is repeatedly performed. Specifically, backward traveling and forward traveling are repeated until the side brush 18 gets over the mat R. As a result, it can be more reliably prevented that the electric vacuum cleaner 11 becomes unable to travel due to advancing in the state where the electric vacuum cleaner lifts the mat R up.

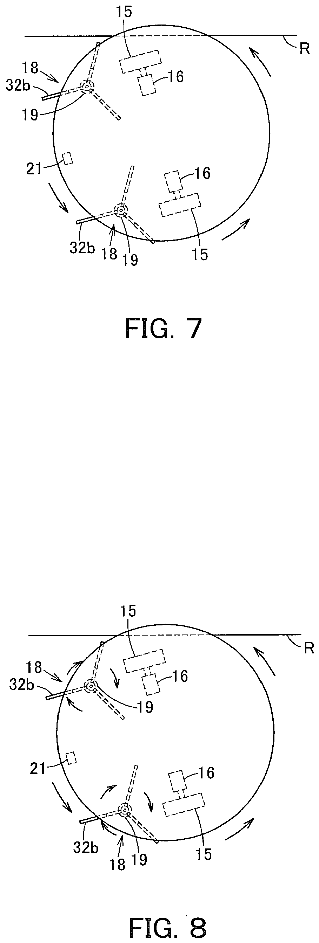

Next, a third embodiment is described with reference to Fig. 7. The same components and operations as in the first embodiment described above are provided with the same reference symbols and description thereof is omitted.

According to this third embodiment, in the first embodiment described above, when the obstacle detecting unit 21 detects that the mat R on the floor surface F has been lifted, the control unit 22 controls the driving wheels 15 (motors 16) so that the electric vacuum cleaner 11 changes its autonomous traveling state and avoids this obstacle, that is, the electric vacuum cleaner 11 turns at this position to avoid the mat R.

In detail, when the obstacle detecting unit 21 detects that the mat R on the floor surface F has been lifted, by making the rotation directions of the driving wheels 15 (motors 16) opposite to each other, the control unit 22 turns the electric vacuum cleaner 11 by, for example, 90 degrees or more at this position so that the brush bristles 32b of the side brush 18 come out from the part under the mat R as shown in Fig. 7. At the time of this turning, the side brushes 18 (turn motors 19) may stop turning. Thereafter, the electric vacuum cleaner 11 is made to travel forward in the direction to which the electric vacuum cleaner was turned. As a result, it can be more reliably prevented that the electric vacuum cleaner 11 becomes unable to travel due to advancing in the state where the electric vacuum cleaner lifts the mat R up.

Next, a fourth embodiment is described with reference to Fig. 8. The same components and operations as in the first embodiment described above are provided with the same reference symbols and description thereof is omitted.

According to this fourth embodiment, in the third embodiment described above, when the obstacle detecting unit 21 detects that the mat R on the floor surface F has been lifted, the control unit 22 controls the driving wheels 15 (motors 16) so that the electric vacuum cleaner 11 changes its autonomous traveling state and avoids this obstacle, that is, the electric vacuum cleaner 11 turns at this position to avoid the mat R, and controls the turn motors 19 to turn the side brushes 18 in a direction reverse (opposite) to the turning direction.

In detail, during normal autonomous traveling, the control unit 22 turns the side brushes 18 (turn motors 19) to the central side in the width direction of the main body case 12, in other words, turns the right side brush 18 counterclockwise and the left side brush 18 clockwise so that the side brushes 18 gather dust together to the suction port 24 side. Specifically, during normal autonomous traveling, the side brushes 18 turn in directions opposite to each other. On the other hand, when the side brush 18 extends under the mat R, the control unit 22 controls the driving wheels 15 (motors 16) to turn the electric vacuum cleaner 11 by, for example, 90 degrees or more at this position so as to avoid the mat R, and controls the turn motors 19 to turn the side brushes 18 in a direction opposite to the turning direction. In Fig. 8, the right side brush 18 is turned in the direction opposite to the turning direction of the electric vacuum cleaner 11, that is, in the same direction as the turning direction of the left side brush 18. As a result, when turning the electric vacuum cleaner 11 to avoid the mat R, loads on the turn motors 19 that drive the side brushes 18 can be reduced, and turning can be assisted.

Therefore, according to the fourth embodiment described above, it can be more reliably prevented that the brush bristles 32b of the side brushes 18 are caught by the mat R and obstruct turning of the electric vacuum cleaner 11, so that the electric vacuum cleaner 11 can be easily and reliably turned to avoid the mat R.

Therefore, according to at least one of the embodiments described above, by making the turn body 37 of the obstacle detecting unit 21 project downward relative to the lower surface 12a of the main body case 12, it can be more reliably detected by the obstacle detecting unit 21 that the brush bristles 32b of each side brush 18 have extended under the mat R.

Further, by constituting the obstacle detecting unit 21 by a turn body 37 that projects on the lower part of the main body case 12 on the side in front of the suction port 24 and is turnable in the longitudinal direction, and the microswitch 38 that is positioned at the rear of the turn body 37 and is switched to on/off in a state where the turn body 37 turns rearward, the obstacle detecting unit 21 that can detect a mat R and lifting of the mat R by determining whether the mat R is under the main body case 12 by the control unit 22 according to on/off switching of the microswitch 38, can be easily mechanically constituted. Therefore, it is not necessary to use expensive sensors, etc., separately, and the manufacturing costs can be reduced.

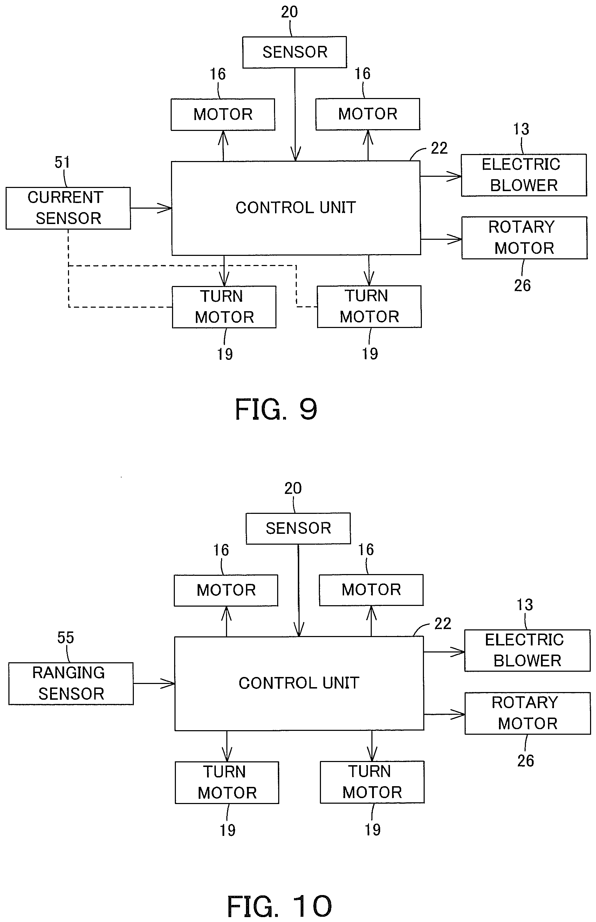

Next, a fifth embodiment is described with reference to Fig. 9. The same components and operations as in the first embodiment described above are provided with the same reference symbols and description thereof is omitted.

According to the fifth embodiment, instead of the obstacle detecting unit 21 in each embodiment described above, a current sensor 51 as an obstacle detecting unit that detects that the brush bristles 32b of each side brush 18 have extended under the mat R by detecting the current flowing in each turn motor 19.

Specifically, when the brush bristles 32b of each side brush 18 extend under the mat R, due to the frictional resistance between the brush bristles 32b and the mat R, turning of each side brush 18 is stopped or each side brush 18 becomes hard to turn, and accordingly, the load (current) of the turn motor 19 that turns each side brush 18 becomes relatively high. Therefore, by detecting a current flowing in each turn motor 19 by the current sensor 51, it can be reliably detected that the brush bristles 32b of each side brush 18 have extended under the mat R.

In addition, the current sensor 51 can be installed inside the main body case 12 without projecting to the outside, so that the current sensor is not caught by various obstacles, etc. , and does not obstruct autonomous traveling of the electric vacuum cleaner 11.

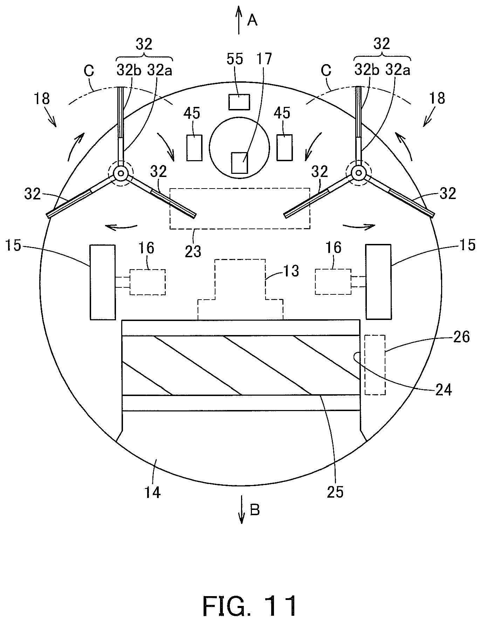

Next, a sixth embodiment is described with reference to Fig. 10 and Fig. 11. The same components and operations as in the first embodiment described above are provided with the same reference symbols and description thereof is omitted.

According to this sixth embodiment, instead of the obstacle detecting unit 21 in the first to fourth embodiments described above, a ranging sensor 55 as an obstacle detecting unit that detects that the brush bristles 32b of each side brush 18 have extended under the mat R by detecting a distance between the lower surface 12a of the main body case 12 and the floor surface F side is provided at a position outside the turning radiuses C of the side brushes 18.

Specifically, the ranging sensor 55 is arranged at, for example, a position at the center in the lateral width direction on the lower surface 12a of the main body case 12 and in front of the brush base parts 31 of the side brushes 18 and directed downward, and is positioned outside the turning radiuses C centered at the brush base parts 31 and passing through the tip end sides of the brush bristles 32b.

When the brush bristles 32b of each side brush 18 extend under the mat R, the mat R is lifted, and accordingly, at the position of the ranging sensor 55, the distance between the lower surface 12a of the main body case 12 and the floor surface F side (the upper surface of the mat R) becomes relatively small. Therefore, by detecting the distance between the lower surface 12a of the main body case 12 and the floor surface F side by the ranging sensor 55, it can be reliably detected that the brush bristles 32b of each side brush 18 have extended under the mat R.

In addition, the ranging sensor 55 can be installed inside the main body case 12 without projecting to the outside, so that the ranging sensor is not caught by various obstacles, etc. , and does not obstruct autonomous traveling of the electric vacuum cleaner 11.

In the embodiments described above, the obstacle to be detected by the obstacle detecting unit 21 is not limited to the mat R.

The obstacle detecting unit 21 may be arranged, for example, in front of each side brush 18, and without limiting to the lower part of the main body case 12, it may be arranged on, for example, the side surface, etc. , of the main body case 12.

Further, in the control unit 22, in addition to the function to control the rotational driving of the driving wheels 15 and 15 via the motors 16 and 16, the function to control the rotations of the side brushes 18 and 18 via the turn motors 19 and 19, the function to control driving of the electric blower 13, and the function to control rotational driving of the rotary brush 25 via the rotary motor 26 are constituted integrally, however, these functions may be constituted separately.

As the constitution of each side brush 18, not only a constitution using brush bristles 32b as a cleaning member but also a constitution using an arbitrary cleaning member, for example, a blade body extending in a strip shape, or a combination of these brush bristles and blade body can also be adopted.

As long as at least one side brush 18 is provided on at least one side in front of the suction port 24 of the main body case 12, the same operations and effects as in the above-described embodiments can be obtained.

Further, a constitution that does not include the electric blower 13, and sweeps up dust on the floor surface F by the rotary brush 25 and collects it to the dust collecting part 14, can also be adopted.

According to at least one of the embodiments described above, when the obstacle detecting unit 21 positioned in front of the suction port 24 detects that the brush bristles 32b of each side brush 18 have extended under the mat R, the control unit 22 controls the driving wheels 15 (motors 16) to change the autonomous traveling state of the electric vacuum cleaner 11 so that the electric vacuum cleaner avoids the mat R, and accordingly, it can be prevented that the electric vacuum cleaner 11 advances in this state, (the brush bristles 32b of) the side brush 18 on the lower part is caught by the mat R, and the electric vacuum cleaner 11 becomes unable to travel, that is, becomes stuck, so that the electric vacuum cleaner can continue cleaning while autonomously traveling.

## Claims

1. An electric vacuum cleaner (11), comprising:
a main body case (12);
a dust collection port (24) provided on a lower part of the main body case (12);
an autonomous traveling driving part (15) provided on the lower part of the main body case (12); and
a turn cleaning part (18) including a cleaning member (32b) that comes into contact with a surface to be cleaned (F), and provided in front of the dust collection port (24) on the lower part of the main body case (12) so as to turn on the surface to be cleaned (F); wherein the electric vacuum cleaner (11) cleans the surface to be cleaned (F) while autonomously traveling on the surface to be cleaned (F), **characterized in that** the electric vacuum cleaner (11) further includes:
an obstacle detecting unit (21) that detects that the cleaning member (32b) of the turn cleaning part (18) has extended under an obstacle (R); and
a control unit (22) that controls the driving part (15) to change the autonomous traveling state so as to avoid an obstacle (R) when the obstacle detecting unit (21) detects that the cleaning member (32b) of the turn cleaning part (18) has extended under the obstacle (R).

2. The electric vacuum cleaner (11) according to Claim 1, wherein
the control unit (22) controls the driving part (15) to change the autonomous traveling state so as to avoid an obstacle (R) when the obstacle detecting unit (21) detects that an obstacle (R) on the surface to be cleaned (F) has been lifted.

3. The electric vacuum cleaner (11) according to Claim 1 or 2, wherein
the obstacle detecting unit (21) is provided so that a part thereof projects downward relative to the main body case (12).

4. The electric vacuum cleaner (11) according to anyone of Claims 1 to 3, wherein
the obstacle detecting unit (21) includes
a turn body (37) that projects on the lower part of the main body case (12) on the side in front of the dust collection port (24), and is turnable in the longitudinal direction, and
a switch (38) that is positioned at the rear of the turn body (37), and is switched to on/off in a state where the turn body (37) turns rearward, and
the control unit (22) determines whether an obstacle (R) is under the main body case (12) according to on/off switching of the switch (38).

5. The electric vacuum cleaner (11) according to any one of Claims 1 to 3, comprising:
a turn driving unit (19) that turn-drives the turn cleaning part (18), wherein
the obstacle detecting unit (21) detects that the cleaning member (32b) of the turn cleaning part (18) has extended under an obstacle (R) by detecting a current flowing in the turn driving unit (19).

6. The electric vacuum cleaner (11) according to any one of Claims 1 to 3, wherein
the obstacle detecting unit (21) detects that the cleaning member (32b) of the turn cleaning part (18) has extended under an obstacle (R) by detecting a distance between the lower part of the main body case (12) and the surface to be cleaned (F) side at a position outside a turning radius of the turn cleaning part (18).

7. The electric vacuum cleaner (11) according to any one of Claims 1 to 6, wherein
when the obstacle detecting unit (21) detects that the cleaning member (32b) of the turn cleaning part (18) has extended under an obstacle (R), the control unit (22) controls the driving part (15) so that the electric vacuum cleaner (11) temporarily travels backward and then changes its advancing direction to avoid the obstacle (R).

8. The electric vacuum cleaner (11) according to any one of Claims 1 to 6, wherein
when the obstacle detecting unit (21) detects that the cleaning member (32b) of the turn cleaning part (18) has extended under an obstacle (R), the control unit (22) controls the driving part (15) so that the electric vacuum cleaner (11) temporarily travels backward and then travels forward again to avoid the obstacle (R).

9. The electric vacuum cleaner (11) according to any one of Claims 1 to 6, wherein
when the obstacle detecting unit (21) detects that the cleaning member (32b) of the turn cleaning part (18) has extended under an obstacle (R), the control unit (22) controls the driving part (15) so that the electric vacuum cleaner (11) turns at the current position to avoid the obstacle (R).

10. The electric vacuum cleaner (11) according to Claim 9, comprising:
a turn driving unit (19) that turn-drives the turn cleaning part (18), wherein
when the obstacle detecting unit (21) detects that the cleaning member (32b) of the turn cleaning part (18) has extended under an obstacle (R), the control unit (22) controls the driving part (15) so that the electric vacuum cleaner (11) turns at the current position to avoid the obstacle (R), and controls the turn driving unit (19) to turn the turn cleaning part (18) in a direction opposite to the turning direction.

## Patentansprüche

1. Elektrischer Staubsauger (11), umfassend:
ein Hauptkörpergehäuse (12);
eine Staubsammeldurchlassöffnung (24), die an einem unteren Teil des Hauptkörpergehäuses (12) vorgesehen ist;
ein autonomes Fahrantriebsteil (15), das am unteren Teil des Hauptkörpergehäuses (12) vorgesehen ist; und
ein Drehreinigungsteil (18), das ein Reinigungsglied (32b) enthält, welches mit einer Oberfläche, die gereinigt (F) werden soll, in Kontakt kommt und vor der Staubsammeldurchlassöffnung (24) am unteren Teil des Hauptkörpergehäuses (12) vorgesehen ist, um auf der Oberfläche, die gereinigt (F) werden soll, zu drehen; wobei der elektrische Staubsauger (11) die Oberfläche, die gereinigt (F) werden soll, reinigt,
während er autonom auf der Oberfläche, die gereinigt werden soll (F), fährt, **dadurch gekennzeichnet, dass** der elektrische Staubsauger (11) ferner Folgendes enthält:
eine Hinderniserkennungseinheit (21), die erkennt, dass das Reinigungsglied (32b) des Drehreinigungsteils (18) unter ein Hindernis (R) gelaufen ist; und
eine Steuereinheit (22), die das Antriebsteil (15) zum Ändern des autonomen Fahrtzustands steuert, um ein Hindernis (R) zu vermeiden, wenn die Hinderniserkennungseinheit (21) erkennt, dass das Reinigungsglied (32b) des Drehreinigungsteils (18) unter das Hindernis (R) gefahren ist.

2. Elektrischer Staubsauger (11) nach Anspruch 1, wobei
die Steuereinheit (22) das Antriebsteil (15) zum Ändern des autonomen Fahrstatus steuert, um das Hindernis (R) zu vermeiden, wenn die Hinderniserkennungseinheit (21) erkennt, dass ein Hindernis (R) auf der Oberfläche, die gereinigt (F) werden soll, angehoben wurde.

3. Elektrischer Staubsauger (11) nach einem der Ansprüche 1 oder 2, wobei
die Hinderniserkennungseinheit (21) derart vorgesehen ist, dass ein Teil davon bezüglich des Hauptkörpergehäuses (12) nach unten vorsteht.

4. Elektrischer Staubsauger (11) nach einem der Ansprüche 1 bis 3, wobei
die Hinderniserkennungseinheit (21)
einen Drehkörper (37), der am unteren Teil des Hauptkörpergehäuses (12) auf der Seite vor der Staubsammeldurchlassöffnung (24) vorsteht und in der Längsrichtung drehbar ist, und
einen Schalter (38), der auf der Rückseite des Drehkörpers (37) angeordnet ist und in einem Zustand ein-/ausgeschaltet wird, wenn der Drehkörper (37) nach hinten dreht, enthält, und
wobei die Steuereinheit (22) gemäß dem Ein-/Ausschalten des Schalters (38) bestimmt, ob sich ein Hindernis (R) unter dem Hauptkörpergehäuse (12) befindet.

5. Elektrischer Staubsauger (11) nach einem der Ansprüche 1 bis 3, umfassend:
eine Drehantriebseinheit (19), die das Drehreinigungsteil (18) zum Drehen antreibt, wobei
die Hinderniserkennungseinheit (21) erkennt, dass das Reinigungsglied (32b) des Drehreinigungsteils (18) unter ein Hindernis (R) gefahren ist, durch Erkennen eines Stroms, der in der Drehreinigungseinheit (19) fließt,

6. Elektrischer Staubsauger (11) nach einem der Ansprüche 1 bis 3, wobei die Hinderniserkennungseinheit (21) erkennt, dass das Reinigungsglied (32b) des Drehreinigungsteils (18) unter ein Hindernis (R) gefahren ist, durch Erkennen eines Abstands zwischen dem unteren Teil des Hauptkörpergehäuses (12) und der Seite der Oberfläche, die gereinigt (F) werden soll, an einer Position außerhalb eines Drehradius des Drehreinigungsteils (18).

7. Elektrischer Staubsauger (11) nach einem der Ansprüche 1 bis 6, wobei,
wenn die Hinderniserkennungseinheit (21) erkennt, dass das Reinigungsglied (32b) des Drehreinigungsteils (18) unter ein Hindernis (R) gefahren ist, die Steuereinheit (22) das Antriebsteil (15) derart steuert, dass der elektrische Staubsauger (11) vorübergehend rückwärts fährt, und dann seine Fortgangsrichtung ändert, um das Hindernis (R) zu vermeiden.

8. Elektrischer Staubsauger (11) nach einem der Ansprüche 1 bis 6, wobei,
wenn die Hinderniserkennungseinheit (21) erkennt, dass das Reinigungsglied (32b) des Drehreinigungsteils (18) unter ein Hindernis (R) gefahren ist, die Steuereinheit (22) das Antriebsteil (15) derart steuert, dass der elektrische Staubsauger (11) vorübergehend rückwärts fährt und dann wieder vorwärts fährt, um das Hindernis (R) zu vermeiden.

9. Elektrischer Staubsauger (11) nach einem der Ansprüche 1 bis 6, wobei wenn die Hinderniserkennungseinheit (21) erkennt, dass das Reinigungsglied (32b) des Drehreinigungsteils (18) unter ein Hindernis (R) gefahren ist, die Steuereinheit (22) das Antriebsteil (15) derart steuert, dass der elektrische Staubsauger (11) an der derzeitigen Position dreht, um das Hindernis (R) zu vermeiden.

10. Elektrischer Staubsauger (11) nach Anspruch 9, umfassend:
eine Drehantriebseinheit (19), die das Drehreinigungsteil (18) zum Drehen antreibt, wobei,
wenn die Hinderniserkennungseinheit (21) erkennt, dass das Reinigungsglied (32b) des Drehreinigungsteils (18) unter ein Hindernis (R) gefahren ist, die Steuereinheit (22) das Antriebsteil (15) derart steuert, dass der elektrische Staubsauger (11) an der derzeitigen Position dreht, um das Hindernis (R) zu vermeiden, und die Drehantriebseinheit (19) zum Drehen des Reinigungsteils (18) in einer Gegenrichtung zur Drehrichtung steuert.

## Revendications

1. Aspirateur électrique (11), comprenant :
un boîtier de corps principal (12) ;
un orifice de collecte de poussière (24) disposé sur une partie inférieure du boîtier de corps principal (12) ;
une partie d'entraînement à déplacement autonome (15) agencée sur la partie inférieure du boîtier de corps principal (12) ; et
une partie de nettoyage rotative (18) comprenant un élément de nettoyage (32b) qui vient en contact avec la surface à nettoyer, et agencée à l'avant de l'orifice de collecte de poussière (24) sur la partie inférieure du boîtier de corps principal (12) de manière à tourner sur la surface à nettoyer ; dans lequel l'aspirateur électrique (11) nettoie la surface devant être nettoyée (F) tout en se déplaçant simultanément sur la surface devant être nettoyée (F), **caractérisé en ce que** l'aspirateur électrique (11) comprend en outre :
une unité de détection d'obstacle (21) qui détecte que l'élément de nettoyage (32b) de la partie de nettoyage rotative (18) s'est étendu sous un obstacle (R) ; et
une unité de commande (22) qui commande la partie d'entraînement (15) pour changer l'état de déplacement autonome de manière à éviter un obstacle (R) lorsque l'unité de détection d'obstacle (21) détecte que l'élément de nettoyage (32b) de la partie de nettoyage rotative (18) s'est étendu sous l'obstacle (R).

2. Aspirateur électrique (11) selon la revendication 1, dans lequel
l'unité de commande (22) commande la partie d'entraînement (15) pour modifier l'état de déplacement autonome de manière à éviter un obstacle (R) lorsque l'unité de détection d'obstacle (21) détecte qu'un obstacle (R) situé sur la surface à nettoyer (F) a été levé.

3. Aspirateur électrique (11) selon la revendication 1 ou 2, dans lequel
l'unité de détection d'obstacle (21) est conçue de telle sorte qu'une partie de celle-ci fait saillie vers le bas par rapport au boîtier de corps principal (12).

4. Aspirateur électrique (11) selon l'une quelconque des revendications 1 à 3, dans lequel
l'unité de détection d'obstacle (21) comprend
un corps rotatif (37) qui fait saillie sur la partie inférieure du boîtier de corps principal (12) sur le côté en face de l'orifice de collecte de poussière (24), et qui peut tourner dans la direction longitudinale, et
un commutateur (38) qui est positionné à l'arrière du corps rotatif (37), et qui est commuté en marche/arrêt dans un état dans lequel le corps rotatif (37) tourne vers l'arrière, et
l'unité de commande (22) détermine si un obstacle (R) se trouve sous le boîtier de corps principal (12) en fonction de la commutation marche/arrêt du commutateur (38) .

5. Aspirateur électrique (11) selon l'une quelconque des revendications 1 à 3, comprenant :
une unité d'entraînement en rotation (19) qui entraîne en rotation la partie de nettoyage rotative (18), dans lequel
l'unité de détection d'obstacle (12) détecte que l'élément de nettoyage (32b) de la partie de nettoyage rotative (18) s'est étendu sous un obstacle (R) en détectant un courant circulant dans l'unité d'entraînement en rotation (19).

6. Aspirateur électrique (11) selon l'une quelconque des revendications 1 à 3, dans lequel
l'unité de détection d'obstacle (21) détecte que l'élément de nettoyage (32b) de la partie de nettoyage rotative (18) s'est étendu sous un obstacle (R) en détectant une distance entre la partie inférieure du boîtier de corps principal (12) et le côté de la surface à nettoyer (F) dans une position en dehors d'un rayon de giration de la partie de nettoyage rotative (18).

7. Aspirateur électrique (11) selon l'une quelconque des revendications 1 à 6, dans lequel
lorsque l'unité de détection d'obstacle (21) détecte que l'élément de nettoyage (32b) de la partie de nettoyage rotative (18) s'est étendu sous un obstacle (R), l'unité de commande (22) commande la partie d'entraînement (15) de sorte que l'aspirateur électrique (11) se déplace temporairement vers l'arrière, puis change de direction de progression pour éviter l'obstacle (R).

8. Aspirateur électrique (11) selon l'une quelconque des revendications 1 à 6, dans lequel
lorsque l'unité de détection d'obstacle (21) détecte que l'élément de nettoyage (32b) de la partie de nettoyage rotative (18) s'est étendu sous un obstacle (R), l'unité de commande (22) commande la partie d'entraînement (15) de sorte que l'aspirateur électrique (11) se déplace temporairement vers l'arrière, puis se déplace à nouveau vers l'avant pour éviter l'obstacle (R).

9. Aspirateur électrique (11) selon l'une quelconque des revendications 1 à 6, dans lequel
lorsque l'unité de détection d'obstacle (21) détecte que l'élément de nettoyage (32b) de la partie de nettoyage rotative (18) s'est étendu sous un obstacle (R), l'unité de commande (22) commande la partie d'entraînement (15) de telle sorte que l'aspirateur électrique (11) change de direction au niveau de la position en cours pour éviter l'obstacle (R).

10. Aspirateur électrique (11) selon la revendication 9, comprenant :
une unité d'entraînement en rotation (19) qui entraîne en rotation la partie de nettoyage rotative (18), dans lequel
lorsque l'unité de détection d'obstacle (21) détecte que l'élément de nettoyage (32b) de la partie de nettoyage rotative (18) s'est étendu sous un obstacle (R), l'unité de commande (22) commande la partie d'entraînement (15) de telle sorte que l'aspirateur électrique (11) tourne au niveau de la position en cours pour éviter l'obstacle (R), et commande l'unité d'entraînement en rotation (19) pour entraîner en rotation la partie de nettoyage rotative (18) dans une direction opposée à la direction de rotation.
